# EUROPÄISCHE PATENTANMELDUNG

(11) **EP 2 335 978 A1**
(43) Veröffentlichungstag der Anmeldung: **22.06.2011**
(21) Anmeldenummer: 10014739.6
(22) Anmeldetag: 18.11.2010
(51) Int. Cl.: B60R 7/08, G07D 9/00

(54) **System zur Aufnahme eines Einkaufschips**

(30) Priorität: 21.11.2009 DE 102009054212
(71) Anmelder: Fleischmann, Stefan, 44807 Bochum (DE); Blome, Richard, 44807 Bochum (DE); Rintjema, Frans, 44807 Bochum (DE); Ihmann, Axel, 44807 Bochum (DE)
(72) Erfinder: Fleischmann, Stefan, 44807 Bochum (DE); Blome, Richard, 44807 Bochum (DE); Rintjema, Frans, 44807 Bochum (DE); Ihmann, Axel, 44807 Bochum (DE)

(57) **Zusammenfassung**

1. System zur Aufnahme eines Einkaufschips

2.1 Bei bekannten Aufnahmevorrichtungen für Einkaufschips besteht das Problem, dass oftmals vergessen wird, den entnommenen Chip nach erfolgter Nutzung wieder in die Aufnahmevorrichtung einzubringen. Der fehlende Chip sorgt dann bei dem nächsten Einkauf für eine zeitaufwändige Ersatzbeschaffung. Ziel der Erfindung ist es, den Nutzer/Entnehmer (m/w) des Chips automatisch an die Rückgabe zu erinnern.

2.2 Um den Entnehmer (m/w) des Chips an die Rückgabe zu erinnern, verfügt das System (1) über Signalgeber (4+5), die automatisch nach Entnahme des Chips aktiviert werden. In dem gezeichneten Ausführungsbeispiel wird eine Leuchtdiode (5) und ein intervallgesteuerter Piepser (4) über einen Mikroschalter (3) eingeschaltet, sobald der Chip (2) aus dem System (1) entnommen wird.

2.3 Das System eignet sich besonders für den Einsatz in Kraftfahrzeugen (KFZ). Der Entnehmer (m/w) des Chips würde nach getätigtem Einkauf und Rückkehr zum KFZ automatisch daran erinnert, den Chip wieder dem System zuzuführen. Durch eine Verbindung des Systems mit den elektrischen Signalgebern und Sensoren des KFZ, sind zahlreiche, Ausgestaltungsmöglichkeiten für die Art, Dauer und Wirkungsweise der Rückgabesignale gegeben. Bei einem nachträglichen Einbau in ein KFZ, könnte die optische Ausgestaltung in Form von dekorativen Figuren umgesetzt werden. Beispiel: Ein "Wackeldackel" hält den Chip im Maul bereit und bellt, wenn er ihn abgenommen bekommt.

## Beschreibung

### System zur Aufnahme eines Einkaufschips

System zur Aufnahme eines Einkaufschips, einer Münze oder eines Gegenstandes die dem Zweck dienen, den Mechanismus zur Entleihe eines Einkaufswagens zu entriegeln und im folgenden "Marke" genannt werden; wobei nach Entnahme der Marke das System den Entnehmer (m/w) der Marke automatisch durch akustische und oder optische und oder haptische Signale und oder Reize zur Rückgabe der Marke auffordert, um für die nächste Entleihe bereit zu sein. Die Stromversorgung kann für den Fall, dass die akustischen oder optischen oder haptischen Signale von elektrischen Bauteilen ausgehen, bei einem Einbau in einem Kraftfahrzeug (KFZ) über die KFZ-Stromversorgung erfolgen, oder bei einer eigenständigen, mobilen Bauweise über eine eigenständige Stromversorgung erfolgen.

Stand der Technik sind Vorrichtungen zur Aufnahme von Einkaufschips (Zum Beispiel: DE9413924U1). Diese sind zumeist für die Verwendung am Schlüsselbund gedacht und haben den Nachteil, dass nicht jeder seinen Schlüsselbund mit derartigen Vorrichtungen versehen möchte.

Ein weiterer Nachteil ergibt sich dadurch, dass der Schlüsselbund bei dem Rücktransport des Einkaufswagens oftmals in eine Kleidungstasche gesteckt wird, da beide Hände für den Rücktransport des Einkaufswagens benötigt werden. Nach Rücknahme des Einkaufschips aus dem Einkaufswagen wird dann auch der Einkaufschip in eine Kleidungstasche oder ins Portemonnaie gesteckt, ohne diesen zurück in die dafür vorgesehene Vorrichtung zu stecken.

Viele Autofahrer (m/w), die die "Schlüsselbundlösung" nicht angenommen haben, bewahren ihre Einkaufschips oder Münzen oder ähnlichen Gegenstände (=Marke) zur Entleihung eines Einkaufswagens an einem festen Ort im KFZ auf. KFZ-Hersteller haben teilweise bereits Schlitze für diese Marken in der Mittelkonsole geschaffen, um diese aufzunehmen.

Jedoch ist auch hier nicht ausgeschlossen, dass der Entnehmer (m/w) der Marke nach Rückbringung des Einkaufswagens diese Marke nicht wieder in die Vorrichtung zurückgibt. Hinzu kommen unterschiedliche Gewohnheiten bei wechselnden Nutzern eines KFZ. So kann es vorkommen, dass zum Beispiel zwei Personen ein gemeinsames KFZ nutzen, wobei die eine Person die Marke an den vorgesehenen Ort zurücklegt, die andere Person, diese aber generell nach erfolgtem Einkauf in eine Kleidungstasche oder ins Portemonnaie legt.

Auf dem Rückweg vom Einkaufswagendepot zum KFZ beschäftigt sich der Entnehmer (m/w) darüber hinaus gedanklich bereits mit anderen Dingen als der Rückgabe der Marke an einen dafür vorgesehenen Ort. Bei dem nächsten Einkauf sorgt die nicht griffbereite Marke dann für eine aufwändige Ersatzbeschaffung, falls nicht zufällig eine passende Münze im Portemonnaie vorhanden ist. Viele Geschäfte kennen das Problem der fehlenden Marken und bevorraten deshalb eine große Menge von Kunststoffchips als Service für ihre Kunden um ihnen damit auszuhelfen. Doch auch hier bleibt der Nachteil des Zeitverlustes für die Beschaffung eines "Ersatzchips" bestehen.

Aufgabe der Erfindung ist es, den Entnehmer (m/w) einer Marke aus einer dafür vorgesehenen Vorrichtung, daran zu erinnern, diese nach erfolgter Rückbringung des Einkaufswagens wieder zurück in die Vorrichtung zu geben, um sie für den nächsten Einkauf bereit zu halten.

Die nach Anspruch 1 formulierte Erfindung löst die Aufgabe dergestalt, dass sie den Entnehmer (m/w) durch akustische und oder optische Signale und oder haptische Signale und oder Reize daran erinnert, die Marke zurück in die dafür vorgesehene Vorrichtung zu stecken.

Die Erfindung wird typischer Weise Anwendung in Kraftfahrzeugen finden, da die meisten Einkäufe mit Kraftfahrzeugen getätigt werden. Es sind verschiedene Ausführungen denkbar. Die Erfindung könnte fest in einem KFZ integriert sein, oder als Nachbausatz eingebaut werden, oder als eigenständige Vorrichtung im KFZ platziert werden.

Bei einem festen Einbau in einem KFZ könnte die Stromversorgung über die KFZ-Stromversorgung erfolgen. Hier wäre auch eine Verbindung zu den Signalgebern eines KFZ's denkbar. So könnte beispielsweise der Bordcomputer über eine Stimme oder Schriftanzeige den Entnehmer (m/w) der Marke an die Rückgabe erinnern. Zusätzlich wäre eine Verbindung zu Sensoren im KFZ denkbar um den Zeitpunkt des Starts, die Art, die Wiederholfrequenz und die Dauer der Rückgabeerinnerung zu steuern. So könnte beispielsweise der Entnehmer (m/w) beim Öffnen der Tür oder beim Startversuch des KFZ's an die Rückgabe erinnert werden. Ähnlich der Erinnerung an das Anschnallen, welches bereits in vielen KFZ's vorhanden ist.

Auch eine Variante ohne Nutzung von elektrischen Bauteilen ist denkbar: Eine Ladevorrichtung, die zum Beispiel im Armaturenbrett eines KFZ integriert ist und sich nur schließen lässt, wenn die Marke eingelegt wird. Der optische Reiz wäre hier beispielsweise die offene Ladevorrichtung, die den Entnehmer (m/w), an die Rückgabe erinnert.

Der Vorteil der Erfindung liegt darin, dass der Zeitaufwand für die Beschaffung einer Marke zur Entleihe eines Einkaufswagens auf ein Minimum reduziert wird, weil das System zur Aufbewahrung der Marke mit automatischer Rückgabeerinnerung dafür sorgt, dass diese mit hoher Wahrscheinlichkeit immer wieder an das System zurückgegeben wird und somit ständig verfügbar ist.

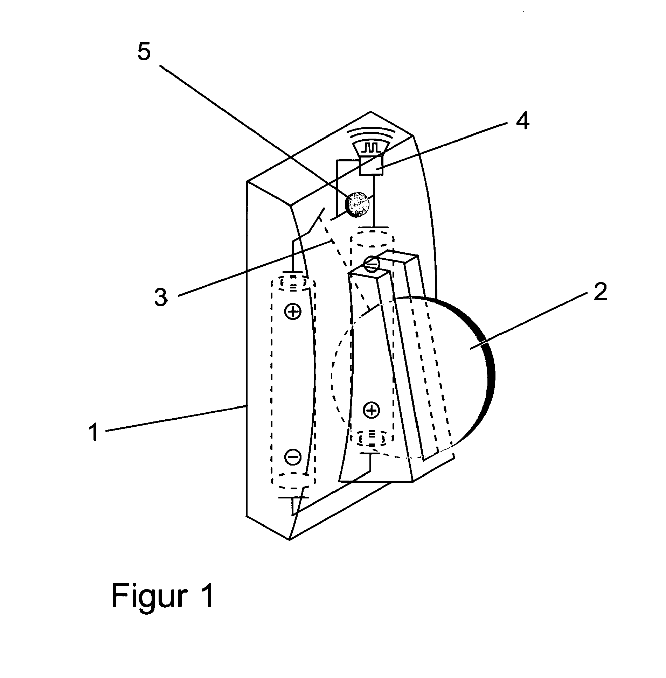

In der Zeichnung Figur 1 ist eine beispielhafte, erfindungsgemäße Ausführung des Systems (1) zu sehen. Die im System (1) platzierte Marke (2) betätigt einen elektrischen Taster (3), der den Stromkreis öffnet, solange die Marke (2) dort verbleibt. Wird die Marke (2) entnommen, schließt der elektrische Taster (3) den Stromkreis und der akustische (4) und der optische Signalgeber (5) werden mit Spannung versorgt. Die aktivierten Signalgeber (4+5) geben Signale ab, die den Entnehmer (m/w) daran erinnern, die Marke (2) dem System (1) zurückzuführen, damit die Marke (2) die Signalgeber (4+5) wieder deaktiviert.

## Patentansprüche

1. System (1) zur Aufnahme eines Einkaufschips (2) oder einer Münze (2), die dem Zweck dienen, den Mechanismus zur Freigabe eines Einkaufswagens zu entriegeln,
**dadurch gekennzeichnet,**
**dass** das System (1) so gebaut ist, dass es sich in Freiräume der Mittelkonsole oder des Armaturenbrettes oder der Dachablage oder der Sonnenblende oder des Innenspiegels oder in der Dachinnenverkleidung eines Kraftfahrzeugs einbauen lässt und eine automatische Rückgabeerinnerung an den Entnehmer (m/w) des Einkaufschips (2) oder der Münze (2) sendet, wobei die Erinnerung über akustische (4) und oder optische (5) und oder haptische Signale und oder Reize und allen sich daraus ergebenden Kombinationsmöglichkeiten erfolgt.

2. System nach Anspruch 1, **dadurch gekennzeichnet, dass** es über eine eigene Stromversorgung verfügt.

3. System nach Anspruch 1, **dadurch gekennzeichnet, dass** die Stromversorgung des Systems über die Kraftfahrzeug -Stromversorgung erfolgt.

4. System nach einem der Ansprüche 2 bis 3, **dadurch gekennzeichnet, dass** das System mit den elektrischen und oder elektronischen Signalgebern eines Kraftfahrzeugs verbunden ist, so ausgeführt, dass die akustischen und oder optischen und oder haptischen Signale und oder Reize über diese Signalgeber erfolgen.

5. System nach einem der Ansprüche 2 bis 4, **dadurch gekennzeichnet, dass** das System mit Sensoren der elektrischen und oder elektronischen Systeme eines Kraftfahrzeugs verbunden ist, um den Zeitpunkt des Starts und oder die Art und oder die Wiederholfrequenz und oder die Dauer der Rückgabeerinnerung zu steuern.

6. System nach Anspruch 1, **dadurch gekennzeichnet, dass** es nicht notwendigerweise eine Stromversorgung benötigt, da die Rückgabeerinnerung hier über eine offene, mechanische Ladevorrichtung erfolgt, die sich nur schließen lässt, wenn der Einkaufschip oder die Münze zurück in die Ladevorrichtung eingebracht wird.

7. System nach Anspruch 6, **dadurch gekennzeichnet, dass** es zusätzlich über einen Stromkreis verfügt um zusätzliche akustische und oder optische und oder haptischen Signale und oder Reize zu erzeugen.

## Geänderte Patentansprüche

### Geänderte Patentansprüche gemäss Regel 137(2) EPÜ.

**1.** System (1) zur Aufnahme eines Einkaufschips (2) oder einer Münze (2), die dem Zweck dienen, den Mechanismus zur Freigabe eines Einkaufswagens zu entriegeln,
das so gebaut ist, dass es sich in Freiräume der Mittelkonsole oder des Armaturenbrettes oder der Dachablage oder der Sonnenblende oder des Innenspiegels oder in der Dachinnenverkleidung eines Kraftfahrzeugs einbauen lässt, über eine Stromversorgung verfügt und eine automatische Rückgabeerinnerung an den Entnehmer (m/w) des Einkaufschips (2) oder der Münze (2) sendet, wobei die Erinnerung über akustische (4) und oder optische (5) und oder haptische Signale und oder Reize und allen sich daraus ergebenden Kombinationsmöglichkeiten erfolgt,
**dadurch gekennzeichnet,**
**dass** die Stromversorgung des Systems über die Kraftfahrzeug-Stromversorgung erfolgt und das System mit den elektrischen und oder elektronischen Signalgebern eines Kraftfahrzeugs verbunden ist, so ausgeführt, dass die akustischen und oder optischen und oder haptischen Signale und oder Reize über diese Signalgeber erfolgen.

**2.** System nach Anspruch 1, **dadurch gekennzeichnet, dass** das System mit Sensoren der elektrischen und oder elektronischen Systeme eines Kraftfahrzeugs verbunden ist, um den Zeitpunkt des Starts und oder die Art und oder die Wiederholfrequenz und oder die Dauer der Rückgabeerinnerung zu steuern.
